# EUROPÄISCHE PATENTSCHRIFT

(11) **EP 3 031 115 B1**
(45) Veröffentlichungstag und Bekanntmachung des Hinweises auf die Patenterteilung: **06.11.2019**
(21) Anmeldenummer: 14738859.9
(22) Anmeldetag: 15.07.2014
(51) Int. Cl.: H02J 3/38

(54) **VERFAHREN ZUM STEUERN VON WINDENERGIEANLAGEN**
METHOD FOR CONTROLLING WIND TURBINES
PROCEDE DE COMMANDE D'EOLIENNES

(30) Priorität: 06.08.2013 DE 102013215396
(43) Veröffentlichungstag der Anmeldung: 15.06.2016
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2014/065143
(87) Internationale Veröffentlichungsnummer: WO 2015/018613

(56) Entgegenhaltungen:
- EP-A1- 2 381 094
- WO-A2-2012/171532
- DE-A1-102010 006 142
- US-A1- 2002 103 745

## Beschreibung

Die vorliegende Erfindung betrifft ein Verfahren zum Einspeisen elektrischer Energie in ein elektrisches Versorgungsnetz mittels einer Windenergieanlage oder mittels eines Windparks. Weiterhin betrifft die vorliegende Erfindung eine Windenergieanlage zum Einspeisen elektrischer Energie in ein elektrisches Versorgungsnetz und die vorliegende Erfindung betrifft einen Windpark zum Einspeisen elektrischer Energie in ein elektrisches Versorgungsnetz.

Es ist allgemein bekannt, mit Windenergieanlagen oder mittels eines Windparks, der mehrere Windenergieanlagen umfasst, elektrische Energie in ein elektrisches Versorgungnetz einzuspeisen. Es ist hierzu auch bekannt, dass die Windenergieanlage bzw. der Windpark neben der reinen Einspeisung von Energie Aufgaben der Netzstützung wahrnehmen kann. Insoweit wird hier von einem allgemein üblichen elektrischen Versorgungsnetz als Wechselspannungsnetz ausgegangen.

Zur Netzstützung mittels Windenergieanlagen ist ein frühes Dokument bspw. das US Patent US 6,965,174 bekannt. Dieses Dokument beschreibt u.a. die Einstellung des Phasenwinkels bei der Einspeisung mittels einer Windenergieanlage. Später wurden auch Verfahren für einen Windpark beschrieben, wie bspw. das Dokument US 7,638,893 beschreibt.

Solche Verfahren überwachen das Netz und reagieren ggf. auf Änderungen im Netz. Heutzutage nimmt der Anteil der Windenergie im Netz zumindest in einigen Staaten oder Regionen stark zu, so dass die Energieeinspeisung, und damit ggf. auch die Netzstabilität, zunehmend von vorherrschenden Windbedingungen abhängen kann. Diesem Problem kann durch Energiezwischenspeicherung begegnet werden. Allerdings können solche Zwischenspeicher kostspielig sein und sind häufig nicht oder nicht in ausreichendem Maße vorhanden.

Das Dokument EP 2 381 094 beschreibt ein Verfahren zur Steuerung eines Versorgungsnetzes, wobei das Versorgungsnetz wenigstens einen unstetigen Einspeiser aufweist, wie bspw. eine Windenergieanlage.

Das Deutsche Patent- und Markenamt hat in der prioritätsbegründenden Anmeldung folgenden Stand der Technik recherchiert: DE 10 2010 006 142 A1, US 6 965 174 B2, US 7 638 893 B2 und US 2011/0148114 A1

Dokument WO2012/171532 offenbart eine Windenergieanlage, bei der eine von der Windgeschwindigkeit abhängige Vorhersage bezüglich der Blindleistung vorgenommen wird.

Der vorliegenden Erfindung liegt somit die Aufgabe zugrunde, zumindest eines der genannten Probleme zu adressieren. Insbesondere soll eine Lösung vorgeschlagen werden, die eine noch weitere Verbesserung der Netzstützung durch Windenergieanlagen ermöglicht. Zumindest soll eine alternative Lösung vorgeschlagen werden.

Erfindungsgemäß wird ein Verfahren zum Einspeisen elektrischer Energie in ein elektrisches Versorgungsnetz gemäß Anspruch 1 vorgeschlagen. Dieses Verfahren verwendet eine Windenergieanlage oder einen Windpark und die Windenergieanlage bzw. der Windpark wandeln kinetische Energie aus Wind mit einer veränderlichen Windgeschwindigkeit in elektrische Energie um. Es wird berücksichtigt, dass die Windgeschwindigkeit veränderlich ist, wobei es hier nicht um Augenblickswerte geht, sondern um gängige Mittelwerte wie ein 10 Sekunden, ein 1 Minuten oder 10 Minuten Mittelwert.

Es wird nun weiter vorgeschlagen, dass abhängig einer Windvorhersage eine Windgeschwindigkeit prognostiziert wird. Eine solche Windvorhersage bzw. Prognose der Windgeschwindigkeit kann nach bekannten, meteorologischen Verfahren vorgenommen werden. Vorzugsweise werden Werte anderer Windenergieanlagen oder anderer Windparks verwendet, die aus aktueller Windrichtung gesehen örtlich vor der hier zugrundeliegenden Windenergieanlage bzw. dem hier zugrundeliegenden Windpark liegen.

Abhängig von dieser prognostizierten Windgeschwindigkeit wird dann eine einzuspeisende Blindleistung als prognostizierte Blindleistung Q_{P} berechnet.

Hier liegt die Erkenntnis zugrunde, dass Änderungen der Windgeschwindigkeit Einfluss auf das Verhalten des elektrischen Versorgungsnetzes oder sogar auf seine Stabilität haben können. Zum Netzstützen kann eine Windenergieanlage oder ein Windpark aber abhängig von der Windgeschwindigkeit oder zumindest im Lichte der Windgeschwindigkeit absehbar eine Blindleistung einspeisen. Solche zu erwartenden Zusammenhänge sind aber nicht unbedingt eindeutig klar und insbesondere für andere Geräte oder Einrichtungen als Windenergieanlagen wie bspw. für einen Netzbetreiber weniger oder gar nicht vorhersehbar.

Erfolgt nun aufgrund sich ändernder Windbedingungen ein sich änderndes Verhalten der Windenergieanlage oder des Windparks, kann dies Ausgleichsmaßnahmen zur Folge haben, die bspw. der Netzbetreiber vorsieht. Die Windenergieanlage oder Windpark sehen ihrerseits aber ebenfalls Ausgleichsmaßnahmen vor und beide Ausgleichsmaßnahmen sind möglicherweise schlecht abgestimmt oder sogar gegenläufig. Eine wichtige Ausgleichsmaßnahme seitens der Windenergieanlage oder des Windparks kann das Einspeisen von Blindleistung sein. Um solche Ausgleichsmaßnahmen besser koordinieren zu können, wird daher vorgeschlagen, dass die Windenergieanlage bzw. der Windpark bereits basierend auf einer Windvorhersage eine Blindleistungsprognose abgibt. Somit können bereits frühzeigt Ausgleichsmaßnahmen koordiniert werden, noch bevor sie überhaupt erforderlich werden.

Vorzugsweise wird daher auch vorgeschlagen, die prognostizierte Blindleistung als Vorhersagegröße an eine das elektrische Versorgungsnetz steuernde Netzleitzentrale zu übertragen. Mit anderen Worten erhält der Netzbetreiber diese Information über die Blindleistung, die bald von der Windenergieanlage oder dem Windpark eingespeist werden soll. Der Netzbetreiber, also die Netzleitzentrale, kann sich somit darauf besser einstellen.

Vorzugsweise wird abhängig der prognostizierten Windgeschwindigkeit auch eine einzuspeisende Wirkleistung als prognostizierte Wirkleistung P_{P} berechnet. Wurde nun eine Windgeschwindigkeit vorhergesagt, die größer als eine mittlere Sturmwindgeschwindigkeit ist, ist die prognostizierte Blindleistung dem Betrage nach größer als die prognostizierte Wirkleistung. Dabei wird hierbei ein Sturmbereich betrachtet und die mittlere Sturmwindgeschwindigkeit liegt zwischen einer Sturmanfangswindgeschwindigkeit, bei der eine Reduktion der Wirkleistung beginnt, und einer Sturmendwindgeschwindigkeit, bei der die einzuspeisende Wirkleistung den Wert 0 erreicht hat. Es wird hier also gezielt eine Lösung für den Sturmbereich vorgeschlagen, der für die Netzstabilität besonders kritisch sein kann. Dies liegt insbesondere daran, dass die Windgeschwindigkeit bei Sturm auch vergleichsweise stark schwanken kann, und dass bei Sturm viele Anlagen heutzutage noch so konstruiert und programmiert sind, dass sie teilweise ihre Leistung sofort zum Schutz auf 0 reduzieren oder die Windenergieanlage sogar vom Netz nehmen. Bei Sturm ist also mit besonders starken Einspeiseschwankungen durch Windenergieanlagen oder Windparks zu rechnen.

Darüber hinaus kann die sturmbedingte Reduzierung der Wirkleistung dazu führen, dass die Einspeiseeinheiten der Windenergieanlagen bzw. des Windparks durch die verringerte Wirkleistung mehr Kapazität für das Einspeisen von Blindleistung zur Verfügung haben. Auch dieser Effekt wird erfindungsgemäß ausgenutzt und somit vorgeschlagen, sogar mehr Blindleistung als Wirkleistung ins Netz einzuspeisen. Zumindest auf Spannungshöhen im Netz kann hierdurch Einfluss genommen werden und auf diesen Einfluss kann sich der Netzbetreiber einstellen.

Gemäß einer Ausführungsform wird vorgeschlagen, dass die prognostizierte Blindleistung für einen Vorhersagezeitraum prognostiziert wird. Für diesen Vorhersagezeitraum wird nun vorgeschlagen, dass die Windenergieanlagen bzw. der Windpark die prognostizierte Blindleistung auch tatsächlich einspeist, selbst wenn sich dann eine von der vorhergesagten Windgeschwindigkeit abweichende Windgeschwindigkeit einstellen sollte. Somit wird durch die Berechnung und insbesondere Weitergabe der prognostizierten Blindleistung eine verlässliche Größe geschaffen. Andere, insbesondere der Netzbetreiber, können sich darauf nicht nur einstellen, sondern sich darauf sogar verlassen. Dies erhöht die Stabilität im Netz.

Es kommt hinzu, dass dieser Ausführungsform auch die Erkenntnis zugrundeliegt, dass eine einspeisbare Blindleistung nur wenig oder ggf. sogar gar nicht von der Windgeschwindigkeit abhängt. Somit ist es also möglich, eine solche prognostizierte Blindleistung dann auch zur Verfügung zu stellen, obwohl der Wind andere Werte aufweist. Einzig problematisch könnte sein, wenn die Kapazität der Einspeiseeinheiten der Windenergieanlage oder des Windparks aufgrund unerwartet hoher Wirkleistungseinspeisung nicht die prognostizierte Blindleistung einspeisen könnte. In diesem Fall kommt zum einen in Betracht, mit Absprache der Beteiligten, insbesondere mit Absprache des Netzbetreibers, diese Blindleistung nicht einzuspeisen, oder notfalls zum Einhalten der prognostizierten und somit im Grunde versprochenen Blindleistung die Wirkleistungseinspeisung zu reduzieren, um den prognostizierten und somit versprochenen Wert der Blindleistungseinspeisung doch einhalten zu können.

Vorzugsweise erfolgt die Berechnung der prognostizierten Blindleistung und ggf. die Übertragung der prognostizierten Blindleistung als Vorhersagegröße an die Netzleitzentrale nur dann, wenn die prognostizierte Windgeschwindigkeit größer als die Sturmanfangswindgeschwindigkeit ist. Es wird somit gezielt vorgeschlagen, die Prognose der Blindleistung nur für den Sturmfall durchzuführen. Hierdurch wird besonders die Erkenntnis berücksichtigt, dass gerade im Sturmfall eine Prognose der Blindleistung wichtig ist, um diese als Größe zum Stabilisieren des Netzes verfügbar zu haben.

Darüber hinaus vermeidet dies auch eine unnötige Berechnung und ggf. unnötige Übertragung in weniger kritischen Zuständen. Dadurch kann auch erreicht werden, dass eine etwaige Festlegung auf eine prognostizierte Blindleistung vermieden wird, wenn die Windgeschwindigkeiten unterhalb eines Sturmfalls liegen. Unterhalb eines Sturmfalls ist häufig mit weniger stark und weniger spontan schwankenden Windgeschwindigkeiten zu rechnen, insbesondere dann, wenn mit einem Windpark eingespeist wird, bei dem sich leichte Schwankungen über den Park verteilen und weniger bei der Einspeisung bemerkbar machen. Somit ist bei solchen geringeren Windgeschwindigkeiten mit einer insgesamt stabileren Situation zu rechnen, die ohne Blindleistungsprognose auskommen kann und dafür die Einspeisung präziser an dem momentanen Netzbedürfnis, insbesondere momentanen Netzzuständen, ausrichten kann. Wenn keine Blindleistung prognostiziert wurde, kann dennoch Blindleistung eingespeist werden, z.B. abhängig von aktuellen Netzzuständen.

Gemäß einer Ausführungsform wird vorgeschlagen, dass die Blindleistung über eine Blindleistungsfunktion eingestellt wird. Dies wird vorzugsweise vorgeschlagen für Windgeschwindigkeiten, die zwischen der Sturmanfangswindgeschwindigkeit und der Sturmendwindgeschwindigkeit liegen. Für diesen Bereich definiert die Blindleistungsfunktion einen Zusammenhang zwischen der einzuspeisenden Blindleistung und der Windgeschwindigkeit. Diese Blindleistungsfunktion ist vorzugsweise eine Polynom-Funktion erster oder zweiter Ordnung, also eine Gerade mit Steigung oder sogar eine Parabelfunktion. Vorzugsweise kann eine Hysterese-Funktion verwendet werden, die insoweit für ansteigende Windgeschwindigkeiten einen anderen Zusammenhang zwischen Blindleistung und Windgeschwindigkeit definiert, als bei wieder abfallender Windgeschwindigkeit. Vorzugsweise kann eine solche Hysterese-Funktion durch zwei unterschiedliche Polynom-Funktionen zweiter Ordnung realisiert werden. Solche Funktionen werden vorzugsweise verwendet, es können aber auch anderen Funktionen zum Einsatz kommen, wie bspw. Polynom-Funktionen höherer Ordnung, trigonometrische Funktionen, wie z.B. Abschnitte einer Sinus-Funktion, oder auch Spline-Funktionen, die einen funktionalen Zusammenhang beschreiben, der über mehrere Stützstellen beschrieben wird.

Vorzugsweise werden Informationen von anderen Windenergieanlagen und/oder anderen Windparks verwendet, um die Windvorhersage zu erstellen. Hierzu können auch Informationen von bekannten Wetterdiensten, insbesondere über Hoch- und Tiefdruckgebieten und entsprechende großräumige Großwetterlagen und Luftbewegung hinzugezogen werden. Vorteilhaft ist aber die Verwendung von Informationen wenigstens einer weiteren Windenergieanlage und/oder wenigstens eines weiteren Windparks, weil Windenergieanlagen und Windparks über ein Informationssystem, insbesondere über ein sog. SCADA verbunden sein können. Hierdurch ist es möglich, ein vernetztes System aufzubauen, dem auch gleichgelagerte Wetterinformationen zugrundeliegen bzw. zugrundegelegt werden können. Insbesondere kann die Messung der Windgeschwindigkeit von vielen Faktoren abhängen, insbesondere von dem Messsensor und der Höhe, in der gemessen wird. Erfasst die Windenergieanlage bspw. die Windgeschwindigkeit durch ihren aerodynamischen Rotor, so liegt dieser Windgeschwindigkeitsmessung eine sehr hohe Messhöhe zugrunde, die heutzutage regelmäßig über 100 Meter liegen kann, und ihr liegt eine stark vergleichmäßigte Größe zugrunde, weil der aerodynamische Rotor vergleichsweise träge ist, jedenfalls im Vergleich zu einem bekannten Anemometer, die eine große Fläche überstreicht. Durch die Verwendung von Windmessdaten anderer Windenergieanlagen bzw. anderer Windparks werden zielgerichtet letztendlich genau solche Windmesswerte zugrundegelegt, die auch später relevant und effektiv werden an der betreffenden Windenergieanlage.

Außerdem wird eine Windenergieanlage zum Einspeisen elektrischer Energie in ein elektrisches Versorgungsnetz vorgeschlagen, die dazu vorbereitet ist, ein Verfahren gemäß wenigstens einer der beschriebenen Ausführungsformen durchzuführen. Vorzugsweise weist eine solche Windenergieanlage einen Generator auf, der zum Erzeugen einer Generatornennleistung ausgelegt ist, und eine Einspeisevorrichtung, die zum Durchführen des Einspeisens vorbereitet ist. Dabei ist die Einspeiseeinheit zum Einspeisen eines maximalen Einspeisestroms ausgelegt, der größer ist, als ein Einspeisestrom zum Einspeisen der Generatornennleistung.

Die Windenergieanlage ist insoweit dazu vorbereitet, einen größeren Strom einzuspeisen, als nötig wäre, um nur die dauerhaft maximale Leistung des Generators in das Netz einzuspeisen.

Vorzugsweise weist die Einspeisevorrichtung mehrere Einspeiseeinheiten auf und zwar so viele Einspeiseeinheiten, dass mehr Einspeiseeinheiten vorhanden sind, als zum Einspeisen der von der Windenergieanlage erzeugbaren Leistung nötig wären. Also insbesondere mehr Einspeiseeinheiten, als zum Einspeisen der Generatornennleistung nötig wäre. Vorzugsweise sind solche Einspeiseeinheiten als Leistungsschränke vorgesehen und es wird somit wenigstens ein zusätzlicher Leistungsschrank vorgesehen, als zum Einspeisen der Nennleistung oder maximal dauerhaft erzeugbaren Leistung nötig wäre. Hierdurch kann gezielt Blindleistung eingespeist werden, während gleichzeitig Nennleistung eingespeist wird. Außerdem kann im extremen Fall, wenn gar keine Nennleistung eingespeist wird, oder nur wenig Nennleistung eingespeist wird, mehr Blindleistung als Nennleistung eingespeist werden. Insoweit wird für diesen Vergleich zwischen Blind- und Nennleistung die Einheit VAr mit der Einheit W gleichgesetzt.

Außerdem wir vorgeschlagen, einen Windpark zum Einspeisen elektrischer Energie in ein elektrisches Versorgungsnetz vorzusehen. Dieser Windpark ist dazu vorbereitet, zum Einspeisen ein Verfahren gemäß wenigstens einer der oben beschriebenen Ausführungsformen des Einspeiseverfahrens einzusetzen.

Vorzugsweise weist ein solcher Windpark eine Zentralsteuereinheit zum Steuern des Windparks auf. Verfahrensschritte zum Durchführen des Einspeiseverfahrens werden entsprechend auf der Zentralsteuereinheit implementiert. Zumindest gemäß einer Ausführungsform bedeutet das, dass die Zentralsteuereinheit an die einzelnen Windenergieanlagen des Windparks Werte vorgibt, welche Wirkleistung und welche Blindleistung die jeweilige Anlage einspeisen soll. Die faktische Umsetzung der Wirkleistung- und/oder Blindleistungseinspeisung jeder einzelnen Anlage führt diese Anlage durch, bzw. sie führt ihren Anteil dieser Einspeisung des Gesamtwindparks durch. Insoweit steuert jede Windenergieanlage einen Einspeisestrom bei, der sich nach den Vorgaben der Zentralsteuereinheit richtet und wobei alle diese einzelnen Einspeiseströme zusammen addiert und an dem gemeinsamen Netzanschlusspunkt des Windparks ans Netz eingespeist werden.

Vorzugsweise ist der Windpark dazu ausgelegt, einen größeren Strom einzuspeisen, als zum Einspeisen der maximalen Wirkleistung nötig wäre, für den der Windpark ausgelegt ist. Insbesondere kann diese maximale Wirkleistung der Nennleistung des Windparks, also der Summe aller Nennleistungen der Windenergieanlagen des Windparks, entsprechen. Dieser Windpark kann somit mehr Blindleistung einspeisen, als Wirkleistung bzw. er kann selbst dann noch Blindleistung einspeisen, wenn bereits maximale Wirkleistung eingespeist wird.

Vorzugsweise weist ein Windpark mehrere Windenergieanlagen auf, wie oben im Zusammenhang mit wenigstens einer Ausführungsform einer Windenergieanlage beschrieben wurde. Insbesondere sind alle Windenergieanlagen solche wie oben gemäß zumindest einer Ausführungsform beschrieben wurde.

Nachfolgend wird die Erfindung exemplarisch anhand von Ausführungsformen unter Bezugnahme auf die begleitenden Figuren näher erläutert.
- Figur 1: zeigt schematisch eine Windenergieanlage in einer perspektivischen Ansicht.
- Figur 2: zeigt schematisch einen Windpark.
- Figur 3: zeigt Diagramme, die einen Zusammenhang zwischen tatsächlichem Wind, Windvorhersage und prognostizierter Blindleistung veranschaulichen.
- Figur 4: zeigt ein Diagramm, das bevorzugte Zusammenhänge zwischen prognostizierter Blindleistung und vorhergesagter Windgeschwindigkeit veranschaulicht.

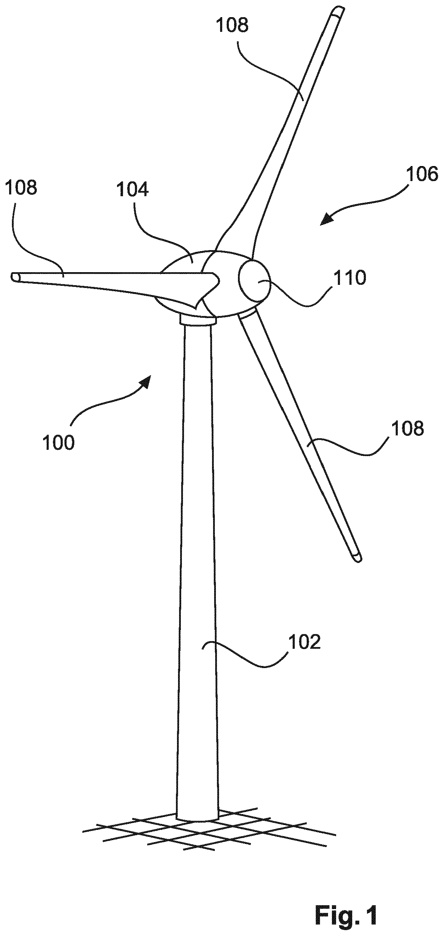

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

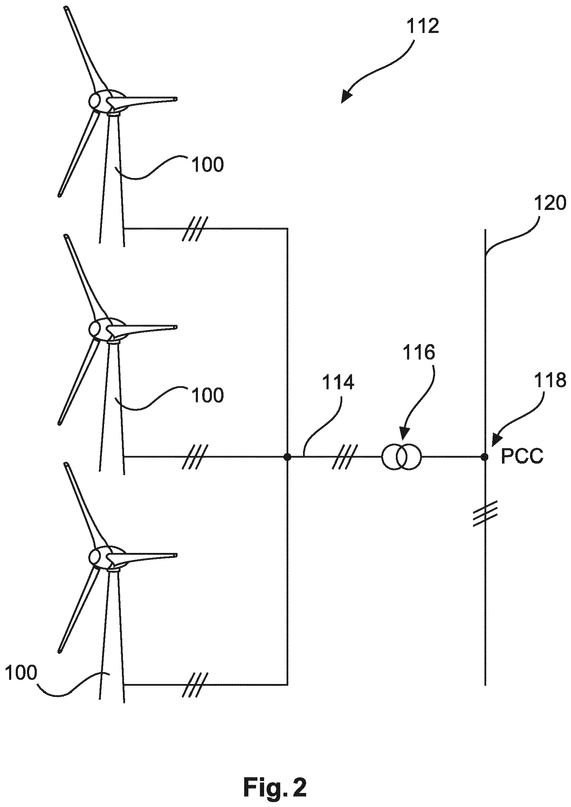

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

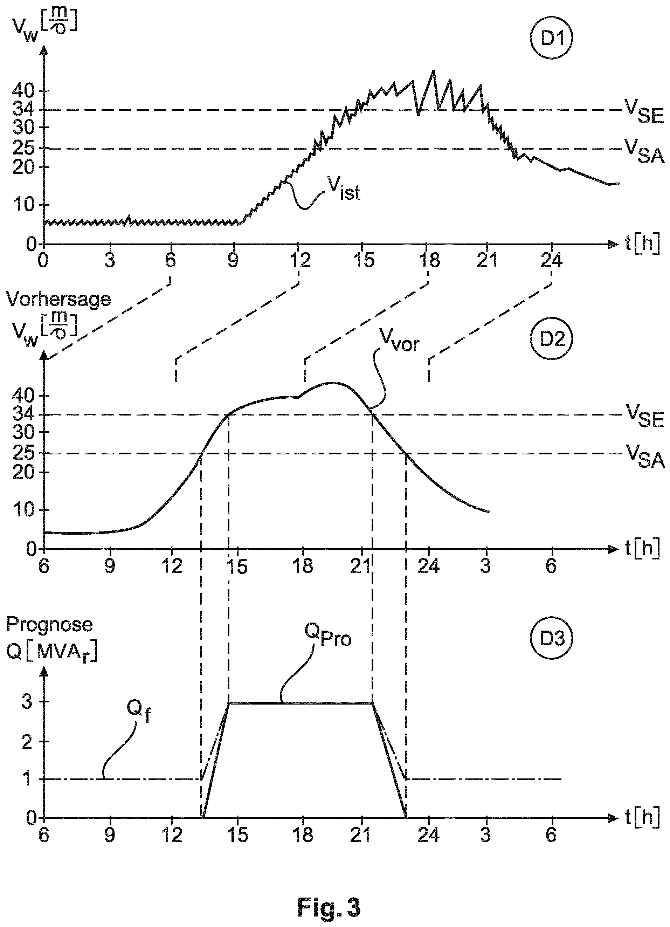

Fig. 3 zeigt in einem ersten Diagramm D1 schematisch einen möglichen Verlauf der Windgeschwindigkeit etwa über den Zeitraum eines Tages. Das mittlere Diagramm D2 gibt dazu eine mögliche Windvorhersage an, die in dem gezeigten Beispiel, zum Zwecke der Veranschaulichung, von einer Vorhersagezeit von sechs Stunden ausgeht. Dieses mittlere bzw. zweite Diagramm D2 ist insoweit um sechs Stunden vorgezogen. Einen Zusammenhang zwischen den Zeiten der Vorhersagen und den Zeiten des tatsächlichen Windes gemäß dem ersten Diagramm D1 sind durch gestrichelte Linien angedeutet, die jeweils die Zeiten sechs Stunden, 12 Stunden, 18 Stunden und 24 Stunden optisch verbinden.

Das untere und dritte Diagramm D3 gibt einen möglichen Verlauf einer Prognose der einzuspeisenden Blindleistung Q an.

Zu Veranschaulichungszwecken wurde der Verlauf einer Windgeschwindigkeit Vᵢₛₜ ausgewählt, der im Bereich von 0 bis 9 Uhr eine Windgeschwindigkeit von etwa fünf Metern pro Sekunde aufweist. Dies entspricht etwa einer Windstärke von drei Bft. Die Windgeschwindigkeit ist dabei nicht als glatte Linie angezeigt, um natürliche Windschwankungen anzudeuten.

Bei 9 Uhr beginnt die Windgeschwindigkeit allmählich zu steigen und erreicht bei etwa 12:30 Uhr einen Wert von 25 Metern pro Sekunde. Dies entspricht etwa einer Windstärke von 9 bis 10 Bft. 25 Meter pro Sekunde ist üblicherweise, und auch in dem gezeigten Beispiel, die Windgeschwindigkeit, bei der eine Windenergieanlage zu ihrem Schutz abgeregelt wird. Sie stellt hier die Sturmanfangswindgeschwindigkeit V_{SA} dar.

Der Wind steigt nun noch weiter an und erreicht etwa um 14:30 Uhr einen Wert von 34 Metern pro Sekunde, was Windstärke 12 und damit einem Orkan entspricht. Der Wert von 34 Metern pro Sekunde ist hierbei auch die Windgeschwindigkeit, bei der die Windenergieanlagen üblicherweise und auch im gezeigten Beispiel keine Wirkleistung mehr einspeist und insoweit vollständig abgeregelt ist, insbesondere ihre Rotorblätter vollständig in Fahnenstellung gedreht hat, soweit möglich. Diese Windgeschwindigkeit von 34 Metern pro Sekunde ist hier auch die Sturmendwindgeschwindigkeit.

Gegen 21 Uhr nimmt der Wind wieder ab und fällt unter die Sturmendwindgeschwindigkeit und fällt um etwa 22 Uhr unter die Sturmanfangswindgeschwindigkeit. Somit kann die Windenergieanlage ab 22 Uhr wieder in dem Sinne normal betrieben werden, dass sie nicht abgeregelt werden muss. Das Diagramm versucht auch zu veranschaulichen, dass bei höheren Windgeschwindigkeiten auch die Schwankung der Windgeschwindigkeit zunimmt.

Zu dieser Windgeschwindigkeit des Diagramms D1 ist nun eine Windvorhersage im Diagramm D2 gezeigt, die für den Zeitraum von 6 bis 9 Uhr eine Windgeschwindigkeit von etwa 5 Metern pro Sekunde (Windstärke 3) vorhersagt. Um 9 Uhr steigt die Windgeschwindigkeit gemäß der Vorhersage an und erreicht etwa um 13:30 Uhr die Sturmanfangswindgeschwindigkeit von 25 Metern pro Sekunde. Das ist etwa eine Stunde später als gemäß dem späteren tatsächlichen Verlauf gemäß Diagramm D1, bzw. die Windgeschwindigkeit ist für den Zeitpunkt 12:30 Uhr niedriger vorhergesagt, als sie sich einstellt.

Um 14:30 Uhr erreicht die vorhergesagte Windgeschwindigkeit die Sturmendwindgeschwindigkeit von 34 Metern pro Sekunde und steigt weiter an. Um 21 Uhr fällt die vorhergesagte Windgeschwindigkeit wieder unter die Sturmendwindgeschwindigkeit und um 23 Uhr fällt sie unter die Sturmanfangswindgeschwindigkeit.

In dem Diagramm D3 ist die Prognose der einzuspeisenden Blindleistung Qₚᵣₒ gezeigt. Ihre Einstellung orientiert sind an der vorhergesagten Windgeschwindigkeit gemäß Diagramm D2. Die prognostizierte Blindleistung Qₚᵣₒ steigt somit um 13:30 Uhr an, wenn nämlich die vorhergesagte Windgeschwindigkeit die Sturmanfangswindgeschwindigkeit V_{SA} erreicht und weiter übersteigt. Mit weiterem Anstieg der vorhergesagten Windgeschwindigkeit steigt auch die prognostizierte Blindleistung an und erreicht ihren maximalen Wert um 14:30 Uhr, wenn die vorhergesagte Windgeschwindigkeit die Sturmendwindgeschwindigkeit V_{SE} erreicht hat. Diese prognostizierte Blindleistung Qₚᵣₒ hält ihren maximalen Wert, bis die vorhergesagte Windgeschwindigkeit um 21:30 Uhr wieder unter die Sturmendwindgeschwindigkeit fällt und die prognostizierte Blindleistung Qₚᵣₒ fällt auch mit weiter fallender vorhergesagter Windgeschwindigkeit bis 23 Uhr ab. Hier erreicht die vorhergesagte Windgeschwindigkeit den Wert der Sturmanfangswindgeschwindigkeit und fällt weiter darunter ab. Die prognostizierte Blindleistung Qₚᵣₒ erreicht hierbei den Wert 0.

Somit wird deutlich, dass die prognostizierte Blindleistung, die insoweit zunächst nur einen Wert darstellt, abhängig von der vorhergesagten Windgeschwindigkeit Vᵥₒᵣ festgelegt wird. Vorzugsweise wird diese prognostizierte Blindleistung Qₚᵣₒ dann später auch wie prognostiziert, also wie in Diagramm 3 dargestellt, eingespeist. Mit anderen Worten beginnt also im gezeigten Beispiel der Anstieg der prognostizierten Blindleistung und dann die entsprechend eingespeiste Blindleistung erst um 13:30 Uhr anzusteigen, obwohl die tatsächliche Windgeschwindigkeit aber bereits um 12:30 Uhr die Sturmanfangswindgeschwindigkeit V_{SA} erreicht. Ebenso können umgekehrte Fälle auftreten, bei denen die vorhergesagte Windgeschwindigkeit früher einen höheren Wert erreicht, als später die tatsächliche Windgeschwindigkeit. Vorzugsweise wird grundsätzlich, also nicht nur für das Ausführungsbeispiel der Fig. 3, vorgeschlagen, dass später eine Blindleistung eingespeist wird, die der prognostizierten Blindleistung Qₚᵣₒ entspricht, wenn die sich dann einstellende tatsächliche Windgeschwindigkeit der vorhergesagten Windgeschwindigkeit entspricht oder kleiner ist. Außerdem und alternativ wird, auch allgemein, nicht nur für das gezeigte Ausführungsbeispiel, vorgeschlagen, dass die eingespeiste Blindleistung höher als die prognostizierte Blindleistung ist, wenn die tatsächliche Windgeschwindigkeit höher als die prognostizierte Windgeschwindigkeit ist. Hierbei wird vorgeschlagen, dass aber ein Maximalwert der Blindleistung nicht überschritten wird, die Blindleistung also nicht erhöht wird, wenn die prognostizierte Blindleistung bereits den Maximalwert annimmt.

Die prognostizierte Blindleistung ist in der Fig. 3 im Diagramm D3 für die Zeit von 6 Uhr bis 13:30 Uhr und von 23 Uhr bis 6 Uhr mit dem Wert 0 angegeben. Dies bedeutet zunächst, dass entweder ein Wert 0 für die prognostizierte Blindleistung angesetzt und ggf. zu entsprechenden Steuereinheiten übertragen wird, oder dass für diese Bereiche, also für die Bereiche, in denen die vorhergesagte Windgeschwindigkeit unterhalb der Sturmanfangswindgeschwindigkeit liegt, gar keine prognostizierte Blindleistung überhaupt berechnet wird und entsprechend auch keine prognostizierte Blindleistung bzw. ein entsprechender Wert übertragen wird.

In diesen Zeitbereichen, in denen keine Blindleistung prognostiziert wurde bzw. ihr Wert 0 beträgt, kann gleichwohl Blindleistung ins Netz eingespeist werden. Diese Blindleistung hängt insbesondere von Netzzuständen ab, wie bspw. der Netzspannung am Netzanschlusspunkt oder an einem anderen Messpunkt im elektrischen Versorgungsnetz.

Insoweit bereits eine Blindleistung eingespeist wird, nämlich schon bevor die Windgeschwindigkeit oder die vorhergesagte Windgeschwindigkeit die Sturmanfangswindgeschwindigkeit erreicht hat, gibt es verschiedene Möglichkeiten, diese mit der prognostizierten Blindleistung zusammenzuführen.

Wenn, im gezeigten Beispiel bei 13:30 Uhr, eine prognostizierte Wirkleistung wirksam wird und ansteigt, wird gemäß einer Ausführungsform vorgeschlagen, diese eingespeiste Blindleistung beizubehalten, bis die prognostizierte Blindleistung genau diesen Wert der momentan eingespeisten Blindleistung erreicht. Dann kann die Blindleistungseinspeisung auf den Verlauf der prognostizierten Blindleistung übergehen.

Gemäß einer anderen Ausführungsform wird vorgeschlagen, dass die prognostizierte Blindleistung an ihrem Fußpunkt auf die bereits eingespeiste Blindleistung angehoben wird, also in Ordinatenrichtung gestaucht wird, so dass ich die eingespeiste Blindleistung im gezeigten Beispiel um 13:30 Uhr erhöht, wenn sich die prognostizierte Blindleistung erhöht. Dieser Fall ist in dem Diagramm D3 schematisch durch die strichpunktierte Kennlinie gezeigt, die diese faktisch eingespeiste Blindleistung Q_{F} veranschaulicht.

Außerdem zeigt das Beispiel der Fig. 3 eine prognostizierte Blindleistung Qₚᵣₒ und auch eine faktisch eingespeiste Blindleistung Q_{f}, die den maximalen Wert von 3 MVAᵣ annehmen. Hierbei liegt dem veranschaulichten Beispiel eine Windenergieanlage zugrunde, die eine Nennleistung von 2MW aufweist und insoweit dauerhaft maximal 2MW Wirkleistung erzeugen und einspeisen kann. Gleichwohl ist die Windenergieanlage dazu vorbereitet, eine höhere Blindleistung, nämlich im gezeigten Beispiel von 3 MVAᵣ einzuspeisen.

Zu den Diagrammen der Fig. 3 ist zu beachten, dass diese beispielhaft einen Vorhersagezeitraum von sechs Stunden zugrundelegen. Es kommen aber grundsätzlich auch ganz andere Vorhersagezeiträume in Betracht, insbesondere kürzere Vorhersagezeiträume von einer oder wenigen Stunden, oder vorzugsweise auch noch kürzere Vorhersagezeiträume wie weniger als eine Stunde, weniger als eine halbe Stunde und/oder weniger als eine viertel Stunde. Diese Vorhersagezeiträume werden vorzugsweise allgemein vorgeschlagen, nicht für die Ausführungsform, die dem Beispiel der Fig. 3 zugrundeliegt, sondern ganz allgemein.

Insbesondere für den Betreiber des elektrischen Versorgungsnetzes kann eine solche Prognose der einzuspeisenden Blindleistung für die Planung der Netzsteuerung hilfreich sein. Je längerfristig solche Einspeiseprognosen, insbesondere verlässliche Einspeisevorhersagen, gemacht werden können, umso größer ist die Regelungsfreiheit des Netzbetreibers, weil er dann für seine Planung auch Kraftwerke mit einbeziehen kann, die mehr Zeit zum ganz oder teilweisen Hoch- oder Herunterfahren benötigen. Andererseits sind es besonders kurzfristige Änderungen, also bezogen auf die hier zugrundeliegende Problematik, kurzfristige Änderungen der Einspeiseleistung von Windenergieanlagen, die dem Netzbetreiber bei seiner Planung Probleme bereiten können. Werden solche kurzfristig auftretenden Probleme mit ebenso kurzfristigen Prognosen bzw. kurzfristigen und verlässlichen Vorhersagen begleitet, kann dies die Planung für den Netzbetreiber vereinfachen.

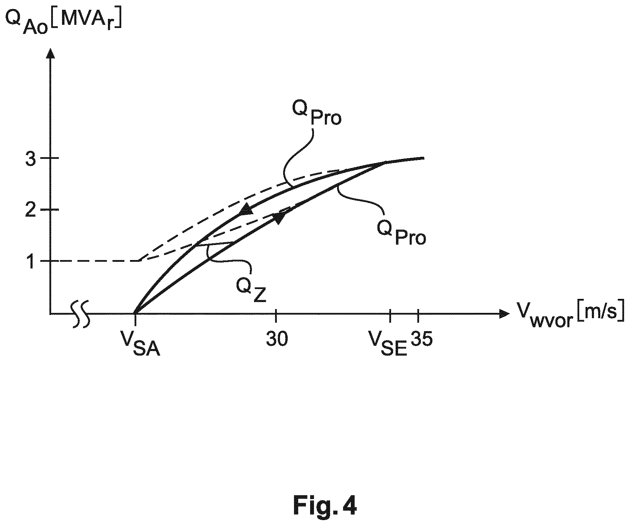

Fig. 4 zeigt ein Diagramm, dass die prognostizierte Blindleistung Qₚᵣₒ in Abhängigkeit der Windgeschwindigkeit, nämlich der vorhergesagten Windgeschwindigkeit V_{wvor} gemäß einer Ausführungsform zeigt. Die Darstellung betrifft hierbei nur hohe Windgeschwindigkeiten, nämlich im Wesentlichen von der Sturmanfangswindgeschwindigkeit V_{SA} zur Sturmendwindgeschwindigkeit V_{SE}. In dem Beispiel steigt die prognostizierte Blindleistung Qₚᵣₒ mit zunehmender Windgeschwindigkeit etwa gemäß einer negativen Parabellform an, bis sie ihren maximalen Wert bei der Sturmendwindgeschwindigkeit V_{SE} erreicht hat. Fällt die Windgeschwindigkeit wieder ab, fällt auch die prognostizierte Blindleistung wieder ab, aber gemäß dem gezeigten Beispiel mit einer anderen Kurve, also mit einem anderen Verlauf, als beim Anstieg. Insoweit sind diese beiden Kurven für die prognostizierte Blindleistung Qₚᵣₒ mit Richtungspfeilen versehen.

Ändert sich die Windgeschwindigkeit, bevor diese im Falle eines Anstiegs die Sturmendwindgeschwindigkeit V_{SE} erreicht hat, oder ändert sie sich bevor sie bei ihrem Abfall die Sturmanfangswindgeschwindigkeit V_{SA} erreicht hat, kann die prognostizierte Blindleistung auf einem waagerechten Verlauf zwischen den beiden gezeigten Ästen von Qₚᵣₒ wechseln. Ein solcher waagerechter Verlauf ist als Q_{Z} exemplarisch eingezeichnet. Ein solcher waagerechter Verlauf kann aber im Grunde an jeder Stelle zwischen diesen beiden Kurvenzweigen auftreten. Dieser Wechsel zwischen diesen beiden Zweigen der Hysterese-Funktion hat den Vorteil, dass die Blindleistung hier zunächst einen stabilen Wert beibehält und insoweit eine gewisse Stabilität der Regelung erreicht wird. Insoweit wird ein Wechsel zwischen Zweigen einer Hysterese-Funktion der prognostizierten Blindleistung so vorgeschlagen, dass die prognostizierte Blindleistung hierbei einen konstanten Wert behält. Dies wird allgemein als vorteilhafte Ausführungsform vorgeschlagen, die nicht nur auf das in Fig. 4 gezeigte Beispiel beschränkt ist.

## Patentansprüche

1. Verfahren zum Einspeisen elektrischer Energie in ein elektrisches Versorgungsnetz, mittels einer Windenergieanlage (100) oder eines Windparks(112),
wobei
- die Windenergieanlage (100) bzw. der Windpark (112) kinetische Energie aus Wind mit einer veränderlichen Windgeschwindigkeit in elektrische Energie umwandeln,
- abhängig einer Windvorhersage eine Windgeschwindigkeit prognostiziert wird und
- abhänaia der prognostizierten Windaeschwindiakeit eine einzuspeisende Blindleistung als prognostizierte Blindleistung (Qp) berechnet wird, und
- die prognostizierte Blindleistung für einen Vorhersagezeitraum prognostiziert wird, **dadurch gekennzeichnet, dass**
- die Windenergieanlage (100) bzw. der Windpark (112) die prognostizierte Blindleistung später in dem Vorhersagezeitraum wie berechnet einspeist, selbst wenn sich dann eine von der prognostizierten Windgeschwindigkeit abweichende Windgeschwindigkeit einstellt.

2. Verfahren nach Anspruch 1,
**dadurch gekennzeichnet, dass**
die prognostizierte Blindleistung (Qp) als Vorhersagegröße an eine das elektrische Versorgungsnetz steuernde Netzleitzentrale übertragen wird.

3. Verfahren nach Anspruch 1 oder 2,
**dadurch gekennzeichnet, dass**
- abhängig der prognostizierten Windgeschwindigkeit eine einzuspeisende Wirkleistung als prognostizierte Wirkleistung (Pp) berechnet werden kann und
- die prognostizierte Blindleistung dem Betrage nach größer als die prognostizierte Wirkleistung ist, wenn eine Windgeschwindigkeit prognostiziert wurde, die größer als eine mittlere Sturmwindgeschwindigkeit ist, die zwischen einer Sturmanfangswindgeschwindigkeit und einer Sturmendwindgeschwindigkeit liegt, wobei
- die Sturmanfangswindgeschwindigkeit eine Windgeschwindigkeit bezeichnet, ab der die Wirkleistung bei weiter ansteigender Windgeschwindigkeit reduziert wird und
- die Sturmendwindgeschwindigkeit eine Windgeschwindigkeit bezeichnet, bei keine Wirkleistung mehr ins Versorgungsnetz eingespeist wird.

4. Verfahren nach einem der vorstehenden Ansprüche,
**dadurch gekennzeichnet, dass** die Berechnung der prognostizierten Blindleistung und ggf. Übertragung der prognostizierten Blindleistung (Qp) als Vorhersagegröße an die Netzleitzentrale dann erfolgt, wenn die prognostizierte Windgeschwindigkeit größer als eine bzw. die Sturmanfangswindgeschwindigkeit ist.

5. Verfahren nach einem der vorstehenden Ansprüche,
**dadurch gekennzeichnet dass**
- zwischen einer bzw. der Sturmanfangswindgeschwindigkeit und einer bzw. der Sturmendwindgeschwindigkeit
- die Blindleistung über eine Blindleistungsfunktion eingestellt wird, die einen Zusammenhang zwischen der Blindleistung und der Windgeschwindigkeit definiert, wobei die Blindleistungsfunktion
- eine Polynom-Funktion erster oder zweiter Ordnung, und/oder
- eine Hysterese-Funktion ist.

6. Verfahren nach einem der vorstehenden Ansprüche,
**dadurch gekennzeichnet, dass**
die Windvorhersage basierend auf Informationen wenigstens einer weiteren Windenergieanlage (100) und/oder wenigstens eines weiteren Windparks (112) erstellt wird.

7. Windenergieanlage (100) zum Einspeisen elektrischer Energie in ein elektrisches Versorgungsnetz,
**dadurch gekennzeichnet, dass** sie dazu vorbereitet ist, ein Verfahren nach einem der vorstehenden Ansprüche durchzuführen.

8. Windenergieanlage (100) nach Anspruch 7,
**dadurch gekennzeichnet, dass**
die Windenergieanlage (100)
- einen Generator aufweist, der zum Erzeugen einer Generatornennleistung ausgelegt ist, und
- eine Einspeisevorrichtung aufweist, zum Durchführen des Einspeisens, wobei die Einspeiseeinheit zum Einspeisen eines maximalen Einspeisestroms ausgelegt ist, der größer ist als ein Einspeisestrom zum Einspeisen der Generatornennleistung.

9. Windenergieanalage (100) nach Anspruch 7 oder 8,
**dadurch gekennzeichnet, dass**
die Einspeisevorrichtung mehrere Einspeiseeinheiten, insbesondere Leistungsschränke, aufweist und mehr Einspeiseeinheiten bzw. Leistungsschränke vorgesehen sind, als zum Einspeisen der von der Windenergieanlage erzeugbaren Leistung, insbesondere ihrer Nennleistung erforderlich ist.

10. Windpark (112) zum Einspeisen elektrischer Energie in ein elektrisches Versorgungsnetz, wobei der Windpark (112) dazu vorbereitet ist, zum Einspeisen ein Verfahren nach einem der Ansprüche 1 bis 5 zu verwenden.

11. Windpark nach Anspruch 10,
**dadurch gekennzeichnet, dass**
der Windpark (112) eine Zentralsteuereinheit zum Steuern des Windparks (112) aufweist, und Verfahrensschritte zum Durchführen des Verfahrens zum Einspeisen auf der Zentralsteuereinheit implementiert sind.

12. Windpark (112) nach Anspruch 10 oder 11,
**dadurch gekennzeichnet, dass**
der Windpark (112) zum Einspeisen eines größeren Stroms ausgelegt ist, als ein Strom zum Einspeisen einer maximalen Wirkleistung, auf die der Windpark (112) ausgelegt ist.

13. Windpark (112) nach einem der Ansprüche 10 bis 12,
**dadurch gekennzeichnet, dass**
er eine oder mehrere Windenergieanalgen (100) nach einem der Ansprüche 7 bis 9 umfasst, insbesondere, dass alle Windenergieanlagen (100) des Windparks (112) Windenergieanlagen (100) gemäß einem der Ansprüche 7 bis 9 sind.

## Claims

1. Method for feeding electrical energy into an electrical supply grid by a wind turbine (100) or a wind farm (112), wherein
- the wind turbine (100) or the wind farm (122) respectively converts kinetic energy from wind having a variable speed to electrical energy,
- a wind speed is predicted based on a wind forecast,
- a to be fed in reactive power is calculated as a predicted reactive power (Qp) based on the predicted wind speed and
- the predicted reactive power is predicted for a forecast period,
**characterized in that**
the wind turbine (100) or the wind farm (112) respectively is feeding in the predicted reactive power during the forecast period as calculated, even if later a wind speed occurs which deviates from the predicted wind speed.

2. Method according to claim 1, **characterized in that**
- the predicted reactive power (Qp) is transmitted as a forecast value to a grid control centre that controls the electrical supply grid.

3. Method according to claim 1 or 2, **characterized in that**
- a to be fed in active power may calculated as a predicted active power (Pp) based on the predicted wind speed and
- the predicted reactive power is greater than the predicted active power, in absolute value, when a wind speed was predicted which is greater than a mean storm wind speed lying between a storm starting wind speed and a storm end wind speed, wherein
- the storm starting wind speed is a wind speed from which the active power is reduced when the wind speed keeps increasing, and
- the storm end speed is a wind speed at which active power is no longer fed into the supply grid.

4. Method according to one of the preceding claims, **characterized in that**
- the predicted reactive power (Qp) is calculated as a forecast value and optionally transmitted as such to the grid control centre only when the predicted wind speed is greater than a or the storm starting wind speed respectively.

5. Method according to one of the preceding claims, **characterized in that**
- between a or the storm starting wind speed respectively and a or the storm end wind speed respectively
- the reactive power is set by a reactive power function, that defines a connection between the reactive power and the wind speed, wherein the reactive power function
- is a polynomial function of first or second order and/or
- is a hysteresis function.

6. Method according the one of the preceding claims, **characterized in that**
- the wind forecast is prepared based on information of at least one other wind turbine (100) and/or at least one other wind farm (112).

7. Wind turbine (100) for feeding electrical energy into an electrical supply grid, **characterized in that**
- she is arranged for performing a method according to of the preceding claims.

8. Wind turbine (100) according to claim 7, **characterized in that**
- the wind turbine (100)
- comprises a generator, that is designed for generating a generator nominal power, and
- comprises a feed-in device, for carrying out the feeding, wherein the feed-in unit is configured to feed a maximum feed-in current that is greater than a feed-in current for feeding the generator nominal power.

9. Wind turbine (100) according to claim 7 or 8, **characterized in that**
- the feed-in device comprises a plurality of feed-in units, in particular power enclosures, and wherein more feed-in units or power enclosures respectively are provided than utilized for the power produced by the wind turbine, in particular the nominal power of said wind turbine.

10. Wind farm (112) for feeding electrical energy into an electrical supply grid, wherein the wind farm (112) is prepared for performing a method to one of the claims 1 to 5.

11. Wind farm according to claim 10, **characterized in that**
- the wind farm (112) comprises a central control unit for controlling the wind farm (112), and steps for executing the method are implemented on the central control unit.

12. Wind farm (112) according to claim 10 or 11, **characterized in that**
- the wind farm (112) is configured to feed a larger current than the current required for feeding a maximum active power for which the wind farm (112) is designed.

13. Wind farm (112) according to one of the claims 10 to 12, **characterized in that**
- he comprises one or more of the wind turbines (100) according to claim 7 to 9, in particular that all wind turbines (100) of the wind farm (112) are wind turbines (100) according to claim 7 to 9.

## Revendications

1. Procédé servant à injecter une énergie électrique dans un réseau d'alimentation électrique au moyen d'une éolienne (100) ou d'un parc éolien (112),
dans lequel
- l'éolienne (100) ou le parc éolien (112) transforme une énergie cinétique issue du vent avec une vitesse de vent variable en une énergie électrique,
- une vitesse de vent est pronostiquée en fonction d'une prévision de vent, et
- une puissance réactive est calculée en tant que puissance réactive pronostiquée (Qp) en fonction de la vitesse de vent pronostiquée,
et
- la puissance réactive pronostiquée est pronostiquée pour une période de prévision,
**caractérisé en ce que**
- l'éolienne (100) ou le parc éolien (112) injecte la puissance réactive pronostiquée ultérieurement pendant la période de prévision telle que calculée même si alors une vitesse de vent divergeant de la vitesse de vent pronostiquée s'installe.

2. Procédé selon la revendication 1,
**caractérisé en ce que**
la puissance réactive pronostiquée (Qp) est transmise en tant que grandeur de prévision à un poste de commande de réseau commandant le réseau d'alimentation électrique.

3. Procédé selon la revendication 1 ou 2,
**caractérisé en ce que**
- une puissance active à injecter peut être calculée en tant que puissance active pronostiquée (Pp) en fonction de la vitesse de vent pronostiquée et
- la puissance réactive pronostiquée est, selon la valeur, supérieure à la puissance active pronostiquée quand une vitesse de vent a été pronostiquée, qui est supérieure à une vitesse moyenne de vent de tempête, qui se situe entre une vitesse de vent de début de tempête et une vitesse de vent de fin de tempête, dans lequel
- la vitesse de vent de début de tempête désigne une vitesse de vent, à partir de laquelle la puissance active est réduite alors que la vitesse de vent continue à augmenter, et
- la vitesse de vent de fin de tempête désigne une vitesse de vent, à laquelle une puissance active n'est plus injectée dans le réseau d'alimentation.

4. Procédé selon l'une quelconque des revendications précédentes,
**caractérisé en ce que** le calcul de la puissance réactive pronostiquée et éventuellement le transfert de la puissance réactive pronostiquée (Qp) en tant que grandeur de prévision au poste de commande de réseau sont effectués quand la vitesse de vent pronostiquée est supérieure à une ou à la vitesse de vent de début de tempête.

5. Procédé selon l'une quelconque des revendications précédentes,
**caractérisé en ce que**
- entre une ou la vitesse de vent de début de tempête et une ou la vitesse de vent de fin de tempête,
- la puissance réactive est réglée par l'intermédiaire d'une fonction de puissance réactive, qui définit un rapport entre la puissance réactive et la vitesse de vent, dans lequel la fonction de puissance réactive
- est une fonction polynomiale de premier ou de deuxième ordre et/ou
- une fonction d'hystérèse.

6. Procédé selon l'une quelconque des revendications précédentes,
**caractérisé en ce que**
la prévision de vent est établie sur la base d'informations d'au moins une autre éolienne (100) et/ou d'au moins un autre parc éolien (112).

7. Eolienne (100) servant à injecter une énergie électrique dans un réseau d'alimentation électrique,
**caractérisée en ce qu'**elle est préparée pour mettre en œuvre un procédé selon l'une quelconque des revendications précédentes.

8. Eolienne (100) selon la revendication 7,
**caractérisée en ce que**
l'éolienne (100)
- présente un générateur, qui est conçu pour générer une puissance nominale de générateur, et
- présente un dispositif d'injection servant à mettre en œuvre l'injection, dans laquelle l'unité d'injection est conçue pour injecter un courant d'injection maximal, qui est supérieur à un courant d'injection servant à injecter la puissance nominale de générateur.

9. Eolienne (100) selon la revendication 7 ou 8,
**caractérisée en ce que**
le dispositif d'injection présente plusieurs unités d'injection, en particulier armoires de puissance, et plus d'unités d'injection ou d'armoires de puissance que nécessaires pour injecter la puissance pouvant être générée par l'éolienne, en particulier sa puissance nominale, sont prévues.

10. Parc éolien (112) servant à injecter une énergie électrique dans un réseau d'alimentation électrique, dans lequel le parc éolien (112) est préparé pour utiliser aux fins de l'injection un procédé selon l'une quelconque des revendications 1 à 5.

11. Parc éolien selon la revendication 10,
**caractérisé en ce que**
le parc éolien (112) présente une unité de commande centrale servant à commander le parc éolien (112), et des étapes de procédé servant à mettre en œuvre le procédé d'injection sont implémentées sur l'unité de commande centrale.

12. Parc éolien (112) selon la revendication 10 ou 11,
**caractérisé en ce que**
le parc éolien (112) est configuré pour injecter un courant plus grand qu'un courant servant à injecter une puissance active maximale, sur laquelle le parc éolien (112) est configuré.

13. Parc éolien (112) selon l'une quelconque des revendications 10 à 12,
**caractérisé en ce que**
il comprend une ou plusieurs éoliennes (100) selon l'une quelconque des revendications 7 à 9, en particulier que toutes les éoliennes (100) du parc éolien (112) sont des éoliennes (100) selon l'une quelconque des revendications 7 à 9.
